# EUROPEAN PATENT SPECIFICATION

(11) **EP 3 764 059 B1**
(45) Date of publication and mention of the grant of the patent: **08.06.2022**
(21) Application number: 20170774.2
(22) Date of filing: 22.04.2020
(51) Int. Cl.: G01C 21/00, G01C 21/20, G01C 21/12

(54) **INDOOR POSITIONING PATHS MAPPING TOOL**
TOOL MIT INNENRAUMPOSITIONSBESTIMMUNG ZUR PFADABBILDUNG
OUTIL DE CARTOGRAPHIE DE CHEMINS POUR POSITIONNEMENT EN MILIEU INTÉRIEUR

(30) Priority: 23.04.2019 IL 26618519
(43) Date of publication of application: 13.01.2021
(73) Proprietor: Oriient New Media Ltd., 6954407 Tel Aviv (IL)
(72) Inventor: FRISH, Amiram, 5346444 Giv'atayim (IL); BALTER, Michael, 6954407 Tel Aviv (IL)
(74) Representative: Kancelaria Eupatent.pl Sp. z.o.o

(56) References cited:
- EP-A1- 2 600 347
- US-A1- 2018 091 939
- US-A1- 2018 283 872

## Description

### Field of the Invention

The present invention relates to the field of indoor positioning systems. More particularly, the invention relates to a method for providing an indoor positioning mapping process (i.e., site surveying) in particular to a method for the mapping of pedestrian paths indoors.

### Background of the invention

Personal mobile devices are currently being used to provide a variety of services. One service is navigation. Navigation outdoors can take advantage of a variety of inputs and sensors, for example GPS. Navigation in GPS-denied or GPS-inaccurate areas requires new methods and systems to navigate, track, and position mobile devices, for example indoors, underground, dense urban streets with high buildings, natural canyons, and similar environments. Modern Indoor Positioning Systems (IPS) relies on a mapping process which associates sensors measurements in a location (i.e., a location fingerprint) to coordinates of an indoor map. For example, an IPS may use Wi-Fi Received Signal Strength Indicator (RSSI) or magnetic measurement from a mobile device as measurement means, but other sensors measurements may be applied as well.

While there are written techniques and processes to perform this operation fully automated known as Simultaneous Localization And Mapping (SLAM), it is still considered a hard problem and has not yet reached maturity for indoor positioning of mobile devices (i.e., the ability to update a map of an unknown indoor environment while simultaneously keeping track of the location of a mobile device within it). Thus a manual or semi-automatic mapping process is still required in practice, where a person (i.e., a mapper) with a mobile device equipped with sensors and a mapping tool is involved in the process of associating measurements to coordinates on the map. The mapping tool is typically a mobile app with a Graphical User Interface (GUI) which takes as input measurements provided by sensors (or other units) of a mobile device (e.g., accelerometer, gyroscope, magnetometer, barometer, GPS, Wi-Fi, etc.), the user (i.e., the mapper) inputs/feedback, and the currently stored map data in the IPS system and updates the map data accordingly. The process of mapping needs to be as easy as possible so that large areas can be mapped as quickly as possible while maintaining high quality of mapping. A high-quality mapping means that a measurement on location "A" in the physical world needs to be associated with location "A" coordinate on the map as closely as possible (for example, a user press on the touchscreen introduces errors corresponding the zoom level of the map and the size of the finger, While one can always zoom more and correct the location of the press it is very time consuming and effort demanding).

US20180283872 relates to mapping tools which enable mapping of path segments between two known waypoints.

EP2600347 relates to methods/systems for creating a virtual tour by, among other things, capturing images of a scene using a mobile device.

It is an object of the present invention to provide a mapping tool that is capable of interacting with an IPS system to achieve fast and easy, high-quality mapping for indoor positioning.

Other objects and advantages of the invention will become apparent as the description proceeds.

### Summary of the Invention

A computer-implemented method for providing a mapping tool with a semi-automatic mode of operation is provided according to claim 1. Preferred embodiments are set out in the dependent claims.

In another aspect, the present invention relates to a system for mapping an indoor environment in a semi-automatic manner according to claim 9.

In yet another aspect, the present invention relates to a device according to claim 10.

### Brief Description of the Drawings

In the drawings:
- Fig. 1 schematically illustrates a system for providing indoor positioning paths mapping tool, according to an embodiment of the invention;
- Fig. 2 is a flow chart generally illustrating the method of the invention;
- Fig. 3 schematically illustrates components diagram, according to an embodiment of the invention
- Fig. 4 shows an example of a screen layout of a mapping tool application, according to an embodiment of the invention.

### Detailed Description of the Invention

Throughout this description the term "sensor data" refers to measurements provided by sensors of a mobile device (or other units of the mobile device suitable to provide sensory information for obtaining location fingerprints), which can be associated with coordinates of an indoor map. For example, the sensory information can be provided by an accelerometer, a gyroscope, a magnetometer, a pressure sensor, GPS, Wi-Fi, or other sensors/units of the mobile device. For example, US 20180245927 discloses a method of providing path estimation for an indoor environment that is based on sensors data.

In the following detailed description, references are made to the accompanying drawings that form a part hereof, and in which are shown by way of illustrations specific embodiments or examples. The following detailed description is therefore not to be taken in a limiting sense and the scope of the present invention is defined by the appended claims.

The Figures and the following description relate to preferred embodiments of the present invention by way of illustration only.

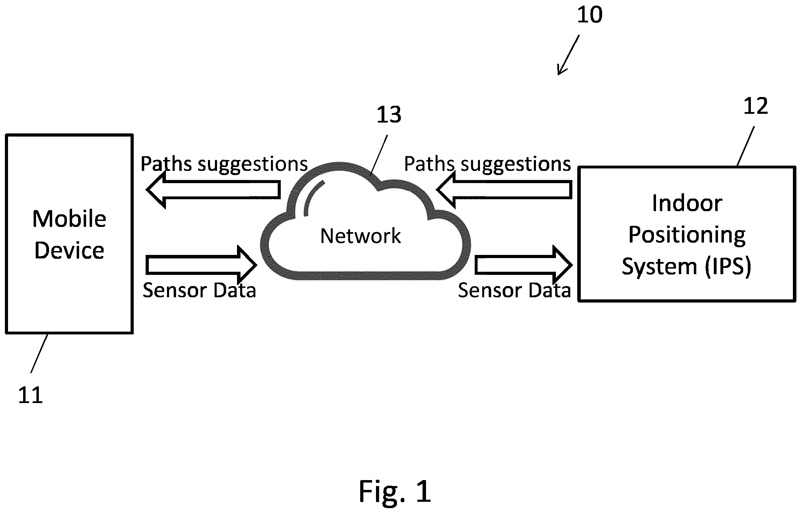

Referring now to the drawings, in which like numerals refer to like elements through the several figures, aspects of the present invention and an exemplary computing operating environment will be described. Fig. 1 and the following discussion are intended to provide a brief, general description of a suitable computing environment in which the invention may be implemented. While the mapping tool of the invention will be described in the general context of program modules that execute in conjunction with an application program that runs on an operating system of a mobile device such as Android by Google Inc., those skilled in the art will recognize that the invention may also be implemented in combination with other program modules.

Fig. 1 schematically illustrates a system 10 according to an embodiment of the invention. System 10 comprises a mobile device 11 (e.g., a smartphone) and an Indoor Positioning System (IPS) 12 that are configured to communicate and exchange data via a data network 13, such as the Internet.

Mobile device 11 comprises a mapping tool application that may involve routines, programs, components, data structures, and other types of structures that perform particular tasks of retrieving map data relative to an indoor environment from the IPS 12, collecting sensory information (i.e., sensor data) from one or more sensors of the mobile device 11, sending collected sensor data to IPS 12, receiving paths suggestions from IPS 12, receiving user inputs (e.g., via touchscreen gestures) indicative of acceptance, rejection or modifications of the paths suggestions, and updating the IPS 12 accordingly.

IPS 12 may involve routines, programs, components, data structures, and other types of structures that perform particular tasks of storing map data relative to an indoor environment, processing sensor data received from the mobile device 11 and accordingly returning paths suggestions to the mapping tool application of mobile device 11, and updating the stored map data according to the user inputs as received by the mapping tool.

Those skilled in the art will appreciate that the invention may be practiced with other computer system configurations, including dedicated hand-held devices, multiprocessor systems, microprocessor-based or programmable consumer electronics, minicomputers, and the like. The invention may also be practiced in distributed computing environments where data such as map data as well as program modules may be located in both local and remote memory storage devices. For example, the IPS 12 can reside on a remoter server, on a separate mobile app or as part of the mapping tool itself as a software package.

Similarly, while certain examples may refer to a mobile device that comprises a touchscreen, other computer or electronic systems can be used as well, such as, without limitation, a tablet, a network-enabled dedicated mobile device, and so on. In addition, while certain user inputs or gestures are described as being provided via a touchscreen of a mobile device, optionally, user inputs can be provided using other techniques, such as by voice or otherwise.

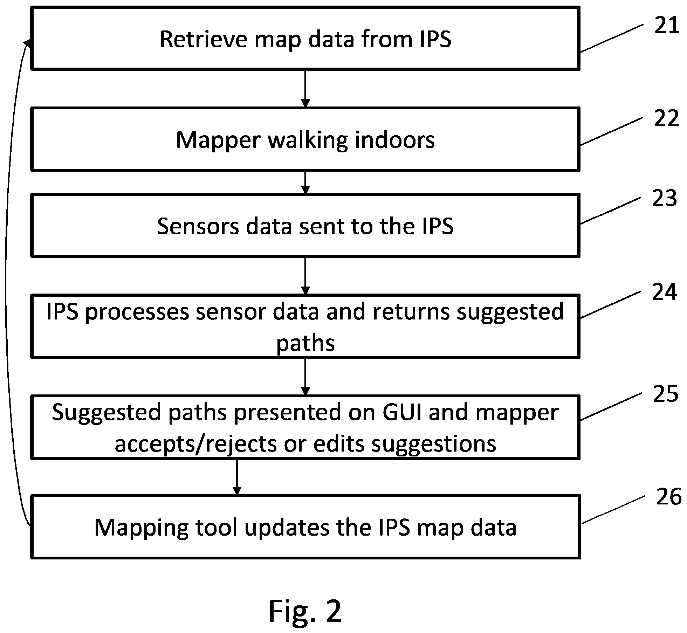

Fig. 2 is a flow chart generally illustrating the method of the invention. According to an embodiment of the invention, the method may involve the following steps:
- Retrieving map data relative to an indoor environment from IPS 12 (step 21);
- Collecting sensor data indicative of location fingerprint with the mapping tool (e.g., mobile device 11 that runs a mapping tool application), while the mapping tool is in transit within the indoor environment (step 22). For example, a user (i.e., a mapper) may walk with mobile device 11 within the indoor environment while the mapping tool automatically collect sensory information during the movement of the mapper;
- Sending the collected sensor data to the IPS 12 (step 23);
- Processing the received sensor data by the IPS 12 and accordingly returning suggested paths (step 24);
- Presenting the suggested paths by the mapping tool (e.g., on the touchscreen of mobile device 11), and enabling the mapper to provide inputs that relative to accept, reject or edit of the suggested paths, e.g., by applying touchscreen gestures (step 25); and
- Updating the map data at the IPS 12 according to the mapper's inputs (step 26).

According to an embodiment of the invention, when the user corrects or accepts the suggested paths the mapping tool re-associates sensor measurements with the corrected path locations. According to another embodiment of the invention, when the user corrects or accepts the suggested paths the mapping tool sends the corrected path to the IPS and the IPS re-associates sensor measurements with the corrected path locations.

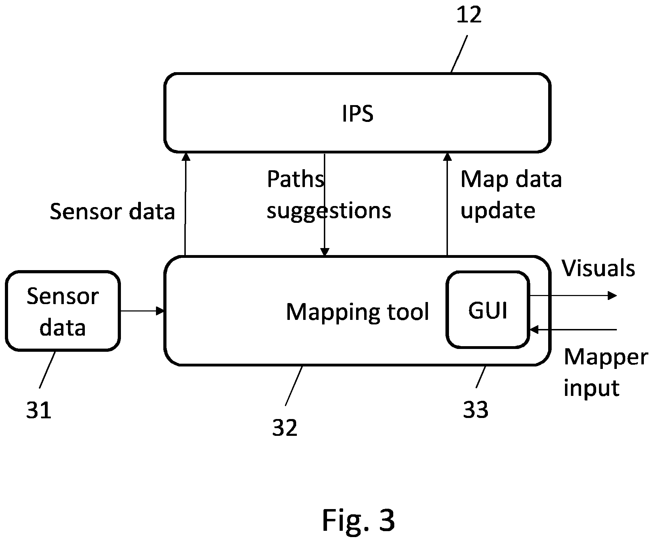

It should be understood that the division of the method illustrated by the flowchart into separate operations, each represented by a block of the flowchart, has been selected for convenience and clarity only. Alternative division of the illustrated method into operations is possible with equivalent results. Fig. 3 schematically illustrates components diagram of the system, according to an embodiment of the invention. The system comprises sensor data 31, a mapping tool 32, Guided User Interface (GUI) 33 and the IPS 12. As described hereinbefore, the mapping 32 can be a dedicated application that runs on a mobile device such as a smartphone. The GUI 33 provides visuals that enables a user to view the map data and the suggested paths, and to interact with the suggested paths (i.e., to modify or edit the suggested paths).

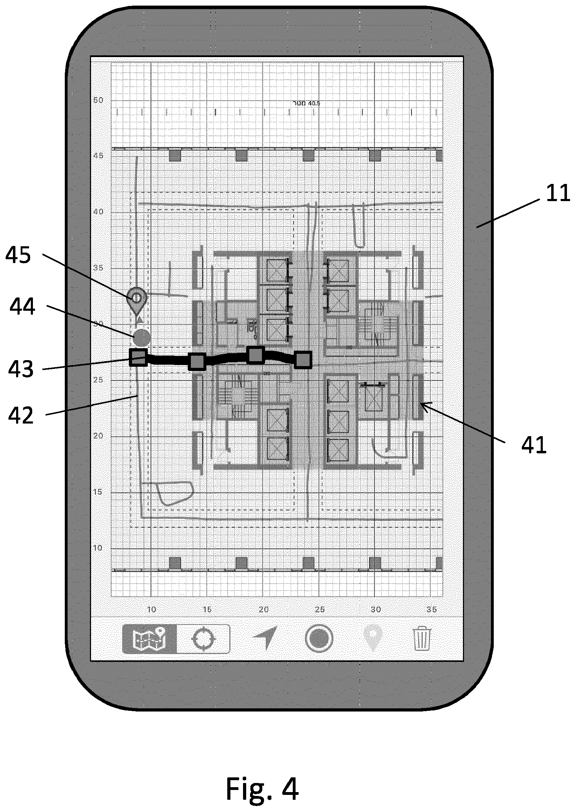

Fig. 4 shows an example of a screen layout of a GUI of a mapping tool application that runs on mobile device 11, according to an embodiment of the invention. The screen layout shows a map data 41, a suggested path 43 (marked by the bold line) and the current map data paths 42 (indicated by a "free hand"-like lines), an estimated current location 44 and a constraint destination pin 45.

As will be appreciated by a skilled person in the art, the example screen layouts, appearance, and terminology as depicted and described herein, are intended to be illustrative and exemplary, and in no way limit the scope of the invention as claimed.

The terms, "for example", "e.g.", "optionally", as used herein, are intended to be used to introduce non-limiting examples. While certain references are made to certain example system components, other components can be used as well and/or the example components can be combined into fewer components and/or divided into further components.

According to an embodiment of the invention, the method comprises a constrained path mapping mode that may involve the following procedures:
- The mapper puts path constraints (e.g., starting point, starting direction, destination point, other waypoints, etc.);
- The IPS generates suggested paths based on "free path estimation" and the input constraints, e.g., by using Pedestrian Dead Reckoning (PDR), thus it does not need to use current map data to create a suggested path. The term "free path estimation" refers herein to an estimated path that is generated based on sensors data (e.g., of the mapping tool) without any other map data (or previously recorded data) or user constraints;
- The IPS supports the constraints mapping mode and the semi-automatic mapping mode;
- The IPS updates the estimated user position (e.g., location, heading and radius of location uncertainty) as the user walks within the indoors environment while the mapping tool presents it on the GUI.

All the above will be better understood through the following illustrative and non-limitative examples:
- The user can correct the IPS location estimate (by dragging an estimation dot for example);
- The user can correct the IPS heading estimate (by clock dial UI for example); The user can correct the IPS uncertainty estimate (uncertainty bar for example);
- The user may edit or modify a path curve by path points dragging, and the IPS may adjust the path with these constraints.

As will be appreciated by the skilled person the arrangement described hereinabove results in a mapping tool that can interact with an IPS system to achieve fast and easy, high-quality mapping for indoor positioning.

All the above description and examples have been given for the purpose of illustration and are not intended to limit the invention in any way. Many different mechanisms, methods of constrained path mapping, electronic and logical elements can be employed.

## Claims

1. A computer-implemented method for providing a mapping tool with a semi-automatic mode of operation, comprising:
a) retrieving (21) map data relative to an indoor environment from an indoor positioning system (12); ;
b) collecting (22) sensor data (31) from one or more units of a mobile device (11) while the mobile device is in transit within the indoor environment, and sending (23) the collected sensor data to the indoor positioning system;
c) processing (24) the collected sensor data received by the indoor positioning system to generate one or more suggested paths to be returned to the mobile device;
d) receiving (25) at least one input, at the mobile device from a user of the mobile device, that is indicative of acceptance or modification of at least one suggested path of the one or more suggested paths; and
e) responsive to receiving the at least one input:
i) updating (26) the map data at the indoor positioning system according to the acceptance or modification of the at least one suggested path to include a corrected path, **characterized in that** the method further comprises:
ii) associating the collected sensor data (31) with locations along the corrected path.

2. The method according to claim 1, wherein the retrieved map data comprises floor plan image, or pedestrian paths that were already mapped.

3. The method according to claim 1, wherein the retrieved map data and/or the suggested paths are presented on a touchscreen of the mobile device.

4. The method according to claim 1, wherein the sensor data are received from one or more of the following units: an accelerometer, a gyroscope, a magnetometer, a pressure sensor, Global Positioning System and Wi-Fi.

5. The method according to claim 1, further comprising a constrained path mapping mode that generates the one or more suggested paths based on free path estimation and one or more constraints provided by the user.

6. The method according to claim 1, further comprising updating an estimated user position as the user walks within the indoor environment while the mapping tool presents an estimated user position.

7. The method according to claim 1, further comprising enabling the user to modify an indoor positioning system location estimation, an indoor positioning system heading estimation, an indoor positioning system uncertainty estimation or any combination thereof.

8. The method according to claim 3, wherein modifying the at least one suggested path is done by touchscreen gestures applied by the user on the touchscreen of the mobile device.

9. A system (10) for mapping an indoor environment in a semi-automatic manner, comprising:
a) an indoor positioning system (12) adapted to provide map data relative to an indoor environment and to generate one or more suggested paths for the indoor environment by processing sensor data collected from the indoor environment; and
b) at least one mobile device (11) configured to:
i) present map data retrieved from the indoor positioning system,
ii) collect sensor data from one or more units of the mobile device while the mobile device is in transit within the indoor environment,
iii) send the collected sensor data to the indoor positioning system,
iv) receive the suggested paths from the indoor positioning system,
v) receive at least one input from a user of the mobile device indicative of acceptance or modification of at least one suggested path of the one or more suggested paths,
vi) responsive to receiving the at least one input, update the map data at the indoor positioning system according to the acceptance or modification of the at least one suggested path to include a corrected path, **characterized in that** after the mobile device updates the map data at the indoor positioning system, at least one of the indoor positioning system or the mobile device associates the collected sensor data with locations along the corrected path.

10. A mobile device (11) comprising:
a) one or more sensors adapted to collect sensor data (31) while said mobile device is in transit within an indoor environment and to send the collected sensor data to an indoor positioning system (12) adapted to provide map data relative to the indoor environment;
b) at least one processor; and
c) a memory comprising computer-readable instructions which when executed by the at least one processor causes the processor to execute a mapping tool (32) configured to:
i) retrieve map data relative to an indoor environment from the indoor positioning system,
ii) present the retrieved map data,
iii) receive one or more suggested paths for the indoor environment, the one or more suggested paths generated by the indoor positioning system from the sensor data collected by the one or more sensors,
iv) receive at least one input, from a user of the mapping tool, indicative of acceptance or modification of at least one suggested path of the one or more suggested paths, and
v) responsive to receiving the at least one input: 1) update the map data at the IPS according to acceptance or modification of the at least one suggested path to include a corrected path, **characterized in that** the mapping tool is further configured to: 2) associate the collected sensor data with locations along the corrected path.

## Patentansprüche

1. Computerimplementiertes Verfahren zum Bereitstellen eines Abbildungswerkzeugs mit einem halbautomatischen Betriebsmodus, das Folgendes umfasst:
(a) Abrufen (21) von Kartendaten relativ zu einer Innenraumumgebung von einem Innenraumpositionierungssystem (12);
(b) Sammeln (22) von Sensordaten (31) von einer oder mehreren Einheiten einer mobilen Vorrichtung (11), während die mobile Vorrichtung innerhalb der Innenraumumgebung unterwegs ist, und Senden (23) der gesammelten Sensordaten an das Innenraumpositionierungssystem;
(c) Verarbeiten (24) der gesammelten Sensordaten, die durch das Innenraumpositionierungssystem empfangen werden, um einen oder mehrere vorgeschlagene Wege zu erzeugen, die an die mobile Vorrichtung zurückgegeben werden sollen;
(d) Empfangen (25) wenigstens einer Eingabe, an der mobilen Vorrichtung von einem Benutzer der mobilen Vorrichtung, die eine Annahme oder eine Modifikation von wenigstens einem vorgeschlagenen Weg des einen oder der mehreren vorgeschlagenen Wege anzeigt; und
(e) als Reaktion auf das Empfangen der wenigstens einen Eingabe:
i) Aktualisieren (26) einer Karte an dem Innenraumpositionierungssystem gemäß der Annahme oder der Modifikation des wenigstens einen vorgeschlagenen Weges, um einen korrigierten Weg zu beinhalten, **dadurch gekennzeichnet, dass** das Verfahren ferner Folgendes umfasst:
ii) Verknüpfen der gesammelten Sensordaten (31) mit Standorten entlang des korrigierten Weges.

2. Verfahren nach Anspruch 1, wobei die abgerufenen Kartendaten ein Grundrissbild oder Fußgängerwege umfassen, die bereits abgebildet wurden.

3. Verfahren nach Anspruch 1, wobei die abgerufenen Kartendaten und/oder die vorgeschlagenen Wege auf einem Berührungsbildschirm der mobilen Vorrichtung dargestellt werden.

4. Verfahren nach Anspruch 1, wobei die Sensordaten von den folgenden Einheiten empfangen werden: einem Beschleunigungsmesser, einem Gyroskop, einem Magnetometer, einem Drucksensor, einem globalen Positionierungssystem und/oder Wi-Fi.

5. Verfahren nach Anspruch 1, das ferner einen Abbildungsmodus für eingeschränkte Wege umfasst, der den einen oder die mehreren vorgeschlagenen Wege basierend auf einer freien Schätzung des Weges und einer oder mehreren durch den Benutzer bereitgestellten Einschränkungen erzeugt.

6. Verfahren nach Anspruch 1, das ferner das Aktualisieren einer geschätzten Benutzerposition umfasst, wenn der Benutzer innerhalb der Innenraumumgebung geht, während das Abbildungswerkzeug eine geschätzte Benutzerposition darstellt.

7. Verfahren nach Anspruch 1, das ferner ein Ermöglichen umfasst, dass der Benutzer eine Standortschätzung des Innenraumpositionierungssystems, eine Kursschätzung des Innenraumpositionierungssystems, eine Unsicherheitsschätzung des Innenraumpositionierungssystems oder eine beliebige Kombination davon modifiziert.

8. Verfahren nach Anspruch 3, wobei das Modifizieren des wenigstens einen vorgeschlagenen Weges durch Berührungsbildschirmgesten erfolgt, die durch den Benutzer auf dem Berührungsbildschirm der mobilen Vorrichtung angewendet werden.

9. System (10) zum Abbilden einer Innenraumumgebung auf eine halbautomatische Weise, das Folgendes umfasst:
a) ein Innenraumpositionierungssystem (12), das angepasst ist, um Kartendaten relativ zu einer Innenraumumgebung bereitzustellen und um einen oder mehrere vorgeschlagene Wege für die Innenraumumgebung durch das Verarbeiten von Sensordaten zu erzeugen, die von der Innenraumumgebung gesammelt werden; und
b) wenigstens eine mobile Vorrichtung (11), die für Folgendes konfiguriert ist:
i) Vorhandensein von Kartendaten, die aus dem Innenraumpositionierungssystem abgerufen werden,
ii) Sammeln von Sensordaten von einer oder mehreren Einheiten der mobilen Vorrichtung, während die mobile Vorrichtung innerhalb der Innenraumumgebung unterwegs ist,
iii) Senden der gesammelten Sensordaten an das Innenraumpositionierungssystem,
iv) Empfangen der vorgeschlagenen Wege von dem Innenraumpositionierungssystem,
v) Empfangen wenigstens einer Eingabe von einem Benutzer der mobilen Vorrichtung, die die Annahme oder die Modifikation wenigstens eines vorgeschlagenen Weges des einen oder der mehreren vorgeschlagenen Wege anzeigt,
vi) als Reaktion auf das Empfangen der wenigstens einen Eingabe, Aktualisieren der Kartendaten an dem Innenraumpositionierungssystem gemäß der Annahme oder der Modifikation des wenigstens einen vorgeschlagenen Weges, um einen korrigierten Weg zu beinhalten,
**dadurch gekennzeichnet, dass** nachdem die mobile Vorrichtung die Kartendaten an dem Innenraumpositionierungssystem aktualisiert hat, das Innenraumpositionierungssystem und/oder die mobile Vorrichtung die gesammelten Sensordaten mit Standorten entlang des korrigierten Weges verknüpft.

10. Mobile Vorrichtung (11), die Folgendes umfasst:
a) einen oder mehrere Sensoren, die angepasst sind, um Sensordaten (31) zu sammeln, während die mobile Vorrichtung innerhalb einer Innenraumumgebung unterwegs ist, und um die gesammelten Sensordaten an ein Innenraumpositionierungssystem (12) zu senden, das angepasst ist, um Kartendaten relativ zu der Innenraumumgebung bereitzustellen;
b) wenigstens einen Prozessor; und
c) einen Speicher, der computerlesbare Anweisungen umfasst, die, wenn sie durch den wenigstens einen Prozessor ausgeführt werden, den Prozessor veranlassen, ein Abbildungswerkzeug (32) auszuführen, das für Folgendes konfiguriert ist:
i) Abrufen von Kartendaten relativ zu einer Innenraumumgebung von dem Innenraumpositionierungssystem,
ii) Darstellen der abgerufenen Kartendaten,
iii) Empfangen eines oder mehrerer vorgeschlagener Wege für die Innenraumumgebung, wobei der eine oder die mehreren vorgeschlagenen Wege durch das Innenraumpositionierungssystem aus den Sensordaten erzeugt werden, die durch den einen oder die mehreren Sensoren gesammelt werden,
iv) Empfangen wenigstens einer Eingabe, von einem Benutzer des Abbildungstools, die die Annahme oder die Modifikation wenigstens eines vorgeschlagenen Weges des einen oder der mehreren vorgeschlagenen Wege anzeigt, und
v) als Reaktion auf das Empfangen der wenigstens einen Eingabe: 1) Aktualisieren der Kartendaten an dem IPS gemäß der Annahme oder der Modifikation des wenigstens einen vorgeschlagenen Weges, um einen korrigierten Weg zu beinhalten, **dadurch gekennzeichnet, dass** das Abbildungswerkzeug ferner für Folgendes konfiguriert ist: 2) Verknüpfen der gesammelten Sensordaten mit Standorten entlang des korrigierten Weges.

## Revendications

1. Procédé mis en œuvre par ordinateur permettant de fournir un outil de cartographie avec un mode de fonctionnement semi-automatique, comprenant :
(a) la récupération (21) de données cartographiques relatives à un environnement intérieur à partir d'un système de positionnement intérieur (12) ;
(b) la collecte (22) de données de capteur (31) à partir d'une ou plusieurs unités d'un dispositif mobile (11) pendant que le dispositif mobile est en transit dans l'environnement intérieur, et l'envoi (23) des données de capteur collectées au système de positionnement intérieur ;
(c) le traitement (24) des données de capteur collectées reçues par le système de positionnement intérieur pour générer un ou plusieurs trajets suggérés à renvoyer vers le dispositif mobile ;
(d) la réception (25) d'au moins une entrée, au niveau du dispositif mobile d'un utilisateur du dispositif mobile, qui indique l'acceptation ou la modification d'au moins un chemin suggéré du ou des chemins suggérés ; et
(e) en réponse à la réception de l'au moins une entrée :
i) la mise à jour (26) de la carte au niveau du système de positionnement intérieur selon l'acceptation ou la modification de l'au moins un trajet suggéré pour inclure un trajet corrigé, **caractérisé en ce que** le procédé comprend en outre :
ii) l'association des données de capteur collectées (31) avec des emplacements le long du trajet corrigé.

2. Procédé selon la revendication 1, dans lequel les données cartographiques récupérées comprennent une image de plan d'étage, ou des chemins piétonniers qui ont déjà été cartographiés.

3. Procédé selon la revendication 1, dans lequel les données cartographiques récupérées et/ou les chemins suggérés sont présentés sur un écran tactile du dispositif mobile.

4. Procédé selon la revendication 1, dans lequel les données de capteur sont reçues d'une ou de plusieurs des unités suivantes : un accéléromètre, un gyroscope, un magnétomètre, un capteur de pression, un système de positionnement global et un Wi-Fi.

5. Procédé selon la revendication 1, comprenant en outre un mode de cartographie de trajet contraint qui génère le ou les trajets suggérés sur la base d'une estimation de trajet libre et d'une ou de plusieurs contraintes fournies par l'utilisateur.

6. Procédé selon la revendication 1, comprenant en outre la mise à jour d'une position d'utilisateur estimée lorsque l'utilisateur marche dans l'environnement intérieur tandis que l'outil de cartographie présente une position d'utilisateur estimée.

7. Procédé selon la revendication 1, comprenant en outre le fait de permettre à l'utilisateur de modifier une estimation d'emplacement de système de positionnement intérieur, une estimation de cap de système de positionnement intérieur, une estimation d'incertitude du système de positionnement intérieur ou toute combinaison de celles-ci.

8. Procédé selon la revendication 3, dans lequel la modification de l'au moins un chemin suggéré est effectuée par des gestes d'écran tactile appliqués par l'utilisateur sur l'écran tactile du dispositif mobile.

9. Système (10) pour cartographier un environnement intérieur de manière semi-automatique, comprenant :
a) un système de positionnement intérieur (12) adapté pour fournir des données cartographiques par rapport à un environnement intérieur et pour générer un ou plusieurs chemins suggérés pour l'environnement intérieur en traitant des données de capteur collectées à partir de l'environnement intérieur ; et
b) au moins un dispositif mobile (11) configuré pour :
i) présenter des données cartographiques extraites du système de positionnement intérieur,
ii) collecter des données de capteur à partir d'une ou de plusieurs unités du dispositif mobile pendant que le dispositif mobile est en transit dans l'environnement intérieur,
iii) envoyer les données du capteur collectées au système de positionnement intérieur,
iv) recevoir les trajets suggérés du système de positionnement intérieur,
v) recevoir au moins une entrée d'un utilisateur du dispositif mobile indiquant l'acceptation ou la modification d'au moins un chemin suggéré du ou des chemins suggérés,
vi) en réponse à la réception de l'au moins une entrée, mettre à jour les données cartographiques au niveau du système de positionnement intérieur selon l'acceptation ou la modification de l'au moins un trajet suggéré pour inclure un trajet corrigé,
**caractérisé en ce que**, après que le dispositif mobile met à jour les
données cartographiques au niveau du système de positionnement intérieur, le système de positionnement intérieur et/ou le dispositif mobile associent les données de capteur collectées à des emplacements le long du trajet corrigé.

10. Dispositif mobile (11) comprenant :
a) un ou plusieurs capteurs adaptés pour collecter des données de capteur (31) pendant que ledit dispositif mobile est en transit dans un environnement intérieur et pour envoyer les données de capteur collectées à un système de positionnement intérieur (12) adapté pour fournir des données cartographiques par rapport à l'environnement intérieur ;
b) au moins un processeur ; et
c) une mémoire comprenant des instructions lisibles par ordinateur qui, lorsqu'elles sont exécutées par l'au moins un processeur, amènent le processeur à exécuter un outil de cartographie (32) configuré pour :
i) récupérer des données cartographiques relatives à un environnement intérieur à partir du système de positionnement intérieur,
ii) présenter les données cartographiques récupérées,
iii) recevoir un ou plusieurs chemins suggérés pour l'environnement intérieur, le ou les chemins suggérés générés par le système de positionnement intérieur à partir des données de capteur collectées par le ou les capteurs,
iv) recevoir au moins une entrée, à partir d'un utilisateur de l'outil de cartographie, indiquant l'acceptation ou la modification d'au moins un chemin suggéré du ou des chemins suggérés, et
v) en réponse à la réception de l'au moins une entrée : 1) mettre à jour les données cartographiques au niveau de l'IPS selon l'acceptation ou la modification de l'au moins un chemin suggéré pour inclure un chemin corrigé, **caractérisé en ce que** l'outil de cartographie est en outre configuré pour : 2) associer les données de capteur collectées avec des emplacements le long du trajet corrigé.
